(19) Europäisches Patentamt / European Patent Office / Office européen des brevets

(11) **EP 2 991 493 B1**

(12) **EUROPEAN PATENT SPECIFICATION**

(45) Date of publication and mention of the grant of the patent:
**21.03.2018 Bulletin 2018/12**

(51) Int Cl.:
***A21D 2/18*** (2006.01)  ***A21D 8/04*** (2006.01)

(21) Application number: **14721243.5**

(22) Date of filing: **16.04.2014**

(86) International application number:
**PCT/EP2014/057797**

(87) International publication number:
**WO 2014/177391 (06.11.2014 Gazette 2014/45)**

(54) **A METHOD FOR MAKING A SOFT CAKE BATTER**

VERFAHREN ZUR HERSTELLUNG EINES LOCKEREN KUCHENTEIGS MIT MINDESTENS 40 GEWICHTSPROZENT GETREIDEMATERIAL UND HÖCHSTENS 30 GEWICHTSPROZENT ZUCKER

PROCÉDÉ DE FABRICATION D'UNE PÂTE À GÂTEAU SOUPLE COMPRENANT EN POIDS AU MOINS 40 % DE CÉRÉALES ET AU MAXIMUM 30 % DE SUCRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2013 EP 13305559**

(43) Date of publication of application:
**09.03.2016 Bulletin 2016/10**

(73) Proprietor: **Generale Biscuit**
**92140 Clamart (FR)**

(72) Inventors:
• **NOTARDONATO, Lelia**
  **F-92160 Hauts de Seine (FR)**
• **CLEMENT, Jerome**
  **F-91400 Gif sur Yvette (FR)**
• **HARICHANE, Didier**
  **F-91000 Essone (FR)**

(74) Representative: **Boult Wade Tennant**
**Verulam Gardens**
**70 Gray's Inn Road**
**London WC1X 8BT (GB)**

(56) References cited:
• Anonymous: "Backen mit Hermann und Siegfried", , 7 May 2008 (2008-05-07), pages 1-8, XP002712118, Retrieved from the Internet: URL:http://www.bulldogboard.eu/hund-im-all tag/backen-mit-hermann-und-siegfried-t8795 .html [retrieved on 2013-08-30]
• Lutz Geisser: "Marmorkuchen mit Sauerteig nach Pöt", , 14 March 2012 (2012-03-14), pages 1-2, XP002712119, Retrieved from the Internet: URL:http://www.ploetzblog.de/2012/03/14/ma rmorkuchen-mit-sauerteig-nach-poet/ [retrieved on 2013-09-02]
• Anonymous: "Mandel-Nusskuchen mit Rosinen", , 10 December 2007 (2007-12-10), pages 1-2, XP002712120, Retrieved from the Internet: URL:http://www.der-sauerteig.com/phpBB2/vi ewtopic.php?t=2774 [retrieved on 2013-09-02]
• DATABASE GNPD [Online] MINTEL; 1 July 2011 (2011-07-01), Anonymous: "Breakfast Cake with fruit", XP002712121, Database accession no. 1580757
• DATABASE GNPD [Online] MINTEL; 1 December 2012 (2012-12-01), Anonymous: "Mini Fudgy Chocolate Cake", XP002712122, Database accession no. 1938683
• Y. H. Hui: "Handbook of Food and Beverage Fermentation (Food Science & Technology)", 19 March 2004 (2004-03-19), Marcel Dekker, XP002712158, page 858, the whole document
• Anonymous: "Sourdough", , 3 August 2011 (2011-08-03), pages 1-5, XP002712159, Retrieved from the Internet: URL:http://web.archive.org/web/20110920152 253/http://en.wikipedia.org/wiki/Sourdough [retrieved on 2013-09-03]

**(Cont. next page)**

- DE VUYST L ET AL: "The sourdough microflora: biodiversity and metabolic interactions", TRENDS IN FOOD SCIENCE AND TECHNOLOGY, ELSEVIER SCIENCE PUBLISHERS, GB, vol. 16, no. 1-3, 1 January 2005 (2005-01-01), pages 43-56, XP027806609, ISSN: 0924-2244 [retrieved on 2005-01-01]
- R. JYOTSNA ET AL: "Improvement of Rheological and Baking Properties of Cake Batters with Emulsifier Gels", JOURNAL OF FOOD SCIENCE, vol. 69, no. 1, 1 January 2004 (2004-01-01), pages SNQ16-SNQ19, XP055077349, ISSN: 0022-1147, DOI: 10.1111/j.1365-2621.2004.tb17880.x

**Description**

Technical field

The present application relates to the field of soft cakes. In particular, the present application relates to soft cakes comprising at least 40 wt.% cereals material and at most 30 wt.% sugars after baking, the percentage being against the total weight of the soft cakes.

The present application further relates to the field of methods for making a soft cake batter. In particular, the present application relates to methods for making a soft cake batter comprising at least 40 wt.% cereals after baking, and at most 30 wt.% sugars after baking, the percentage being against the total weight of the soft cakes.

Prior art

Soft cakes result from compositions and processes, which are numerous and stem from centuries of baker's practice and regional inputs. The typical ingredients for a soft cake are cereal material (usually wheat flour), egg, fat (usually butter or oil), sugars and leavening agent.

Currently available soft cakes contain between 18 wt.% to 36 wt.% cereal material usually in the form of flour. This percentage is calculated based on the finished soft cakes.

In order to make nutritious healthy soft cakes, it would be necessary to increase the amount of cereal material in the soft cakes.

Bakery products with a high amount of cereal material exist such as bread, brioches, panettone, pains au lait, pandori, etc. However, these products cannot be considered to besoft cakes. Indeed, the appearance of these products and their texture are not similar to those of soft cakes. Further, unlike soft cakes, these products require gluten network formation, whereas in soft cakes there is no formation of any gluten network. Also, these products usually have a higher water content.

Since the cereal material in a soft cake is typically provided in the form of flour, a way to increase the amount of cereal material would be to increase the amount of flour.

However, increasing the amount of flour in the soft cake batter would result in an increase in the soft cake batter consistency, which would lead to machinability issues with standard industrial equipment used to pour liquid soft cake batter. This would also reduce the soft cake volume once baked, which would give a poorly attractive shape to the soft cakes. It would also speed up the crumb staling and/or hardness, thus reducing shelf life. Increasing the amount of flour would also lead to the formation of cavities in the product, increasing the crumbliness of the soft cakes. All these drawbacks would lead to a reduction in consumer acceptance of the soft cakes.

A conventional solution for lowering the viscosity of a batter is to increase liquid ingredients of the batter such as water.

However, the addition of water makes the baking difficult since a longer time in the oven is needed for extracting the additional water. This may give a crust with a brown colour and a burnt taste, while the crumb may still have an uncooked taste and poor sensory properties. Another risk pertaining to the addition of water is the formation of a gluten network, which, as discussed above, cannot be present in a soft cake. In particular, the batter would become a stiff dough, which is no longer liquid meaning that the final product could no longer be considered a soft cake.

Additional oil can also be added into the batter for reducing viscosity. However, little flexibility is possible with regard to oil content of the batter since the final soft cake should remain a healthy food product.

Therefore, there remains a need for a method for producing acceptable soft cakes with a high amount of cereal material (namely above 40 wt.% of the final soft cake).

The recipe "Backen mit Herman and Siegfried" from www.bulldoaboard.eu/hund-imalltaa/backen-mit-herman-und-sieafried-t8795.html (7 May 2008) provides a dough recipe for use in a cherry pie.

The recipe "Marmorkuchen mit Sauertig nach pot" from www.ploetzblog.de/2012/03/14/marmorkuchen-mit-sauertig-nach-poet (14 March 2012) provides a marble cake recipe.

The recipe "Mandel-Nusskucken mit Rosinen" from www.dersauertig.com/phpBB2/viewtop.php?t=2774 (10 December 2007) provides a cake recipe.

Summary

There is provided a method for making a soft cake batter comprising at least 40 wt.% cereals material and at most 30 wt.% sugars, preferably at most about 27.5 wt.%, against the total weight of the soft cake after baking, the method comprising:

-    providing flour, sugars and optionally other ingredients for the soft cake;

- mixing a portion of flour representing at least about 60 wt.% of the total flour to be incorporated into the soft cake batter with water and sugars to form a pre-mixture, preferably water and sugars being previously heated, and increasing or maintaining the temperature thereof, so that at the end of the mixing, the temperature of the pre-mixture reaches at least 45°C, preferably between 50°C to 70°C, more preferably between 55°C to 70°C, still more preferably around 60°C;
- maturing the heated pre-mixture at a temperature of at least 45°C, preferably from 50°C to 70°C, still preferably around 60°C, to form a dough ;
- mixing the dough with the remaining flour and optionally the other ingredients for forming the soft cake batter comprising at least 40 wt.% cereals material after baking.

This method provides a soft cake batter that is suitable to be poured and baked in pans, while the cereal materials thereof is at least 40 wt.% with respect to the baked soft cake.

There is provided a method for producing a soft cake, the method comprising:

- providing a soft cake batter according to the first embodiment;
- pouring the soft cake batter into a pan;
- baking the soft cake batter in the pan for producing the soft cake.

According to the invention there is provided a method for making a soft cake, the method comprising:

preparing a mixture by blending sugars, a first portion of flour and water,
increasing or maintaining the temperature of the mixture such that, by the end of the blending, the temperature of the mixture reaches at least 45°C, preferably from 50 °C to 70 °C, still preferably around 60 °C,
allowing the heated mixture to mature at a temperature of from 45°C to 70 °C, more preferably around 60 °C,
combining the matured mixture with a second portion of flour and, optionally, further ingredients to form a batter,
shaping and baking the batter to form a soft cake,
wherein the soft cake comprises at least 40 wt.% cereal material, at most 30wt% sugars, and wherein the ratio of the first portion of flour to the second portion of flour is at least 3:2,
wherein the heated mixture is allowed to mature for from 10 min to 48 hours,
wherein the mixture further comprises one or more enzymes selected from the group consisting of amylases, amyloglucosidase, proteases, hemicellulases, xylanases, cellulase, pullulanase, pentosanases, lipases, phospholipases, transglutaminases, glucose oxydase or mixtures thereof,
wherein the one or more enzymes are in addition to any enzymes which may be present in any of the other starting materials, and
wherein the one or more enzymes are present in the mixture in an amount of from 0.01 to 1.0 wt% based on the total weight of the mixture before maturation.

The present invention will now be further described. In the following passages different aspects of the invention are defined in more detail.

Drawings

The invention will now be described in relation to the following non-limiting figures, in which:

Figure 1 is a flowchart that illustrates the steps of a method for making a soft cake comprising at least 40 wt.% cereals after baking.
Figure 2 represents a CRC graph showing the force applied to a soft cake according to time. The y-axis shows force in N. The x-axis shows time in seconds. The region between 0 and F1 is 10% compression. The region between F1 and F2 is relaxation and the region between F2 and F3 is 50% compresssion.

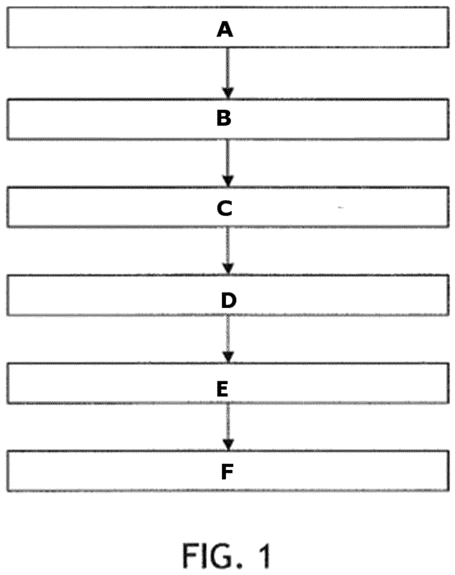

In particular, Figure 1 shows the steps of:

A - Providing flour and water
B - Forming a pre-mixture
C - Maturing the pre-mixture
D - Mixing the dough with other ingredients
E - Pouring the batter into pans
F - Baking in pans

Description

There is provided a method that enables the production of soft cakes with a high amount of cereal material, namely at least 40 wt.% of the final soft cake. Of course, it is desirable for the incorporation of such high levels of cereal material not to be of detriment to the quality of the soft cake, and the soft cake should present all of the usual features associated with such product.

With this aim in mind, there is provided a method for making a soft cake batter. The method for making a soft cake batter is described hereafter with reference to figure 1.

This method enables a soft cake batter to be made that comprises at least 40 wt.% cereal material and at most 30 wt.% sugars, preferably at most 27.5 wt.%, the weight percentages being against the total weight of the soft cake after baking.

The method comprises the following steps:

- providing flour, sugars and optionally other ingredients for the soft cake;
- forming a pre-mixture by mixing a portion of flour representing at least about 60 wt.% of the total flour to be incorporated into the soft cake batter with water and sugars, and increasing or maintaining the temperature thereof, so that at the end of the mixing, the temperature of the pre-mixture reaches at least about 45°C, preferably between about 50°C to about 70°C, more preferably between about 55°C to about 70°C, still more preferably around about 60°C;
- maturing the heated pre-mixture at a temperature of at least about 45°C, preferably from about 50°C to about 70°C, still preferably around about 60°C, to form a dough;
- mixing the dough with the remaining flour and optionally the other ingredients for forming a batter.

In this application, the word "soft cake" means a soft sweet food made from a mixture of flour, sugars, and other ingredients. The soft cake is baked and sometimes iced or decorated. Unlike bread, brioche, panettone, pains au lait, pandori, etc. (bread-like baked products), a batter for soft cake does not contain any gluten network. Gluten is a composite of gliadin and glutenin. A gluten network is formed when glutenin molecules cross-link, that is, where the cross-linked glutenin is attached to gliadin molecules. In bread-like baked products, the gluten network helps with trapping of air bubbles produced during the baking process. Furthermore, it helps the dough rise high and, in the case of bread-like baked products such as panettone it helps to support the fruit pieces. When the batter is baked, the gluten network undergoes denaturation, which, along with starch, contributes to the shape of the final product.

A soft cake presents a texture of crumb being much less elastic than bread-like and bread products. No yeast is used in such soft cakes for soft cake expansion; rather, if needed only chemical leavening agents are used.

Examples of soft cakes includes angel cakes, shortened cakes, butter cakes, sponge cakes, yellow layer cakes, white layer cakes, cupcakes, pound cakes (including quatre-quarts), chiffon cakes, roulades, genoises, madeleines, muffins, Christmas cakes, etc.

Such soft cakes have a long shelf life in comparison to bread, brioche, panettone, pains au lait, pandori, etc. Shelf life is typically longer than about 4 months, preferably about 6 months, more preferably from about 6 to about 12 months at ambient temperature (about 20C).

In this application, the word "batter" means a semi-liquid to liquid mixture of flour, water, ferment, and other ingredients that can be poured. A batter has a viscosity comprised between about 10 Pa.s and about 500 Pa.s, preferably between about 30 Pa.s and about 250 Pa.s.(using the Brookfield method). Methods for measuring viscosity are well known in the art and one example is given below.

In order to allow the pre-mixture to reach a temperature of at least 45°C before maturing, it can be beneficial to warm the water and sugars before introducing them into the mixer. Another way of increasing the temperature of the pre-mixture is to use a double-jacket mixer.

In this application, the word "cereal material" means any cereal ingredients or ingredients derived from cereals. Suitable cereal material may be cereal flour, cereal flakes, whole or hacked cereal grains and seeds, cereal bran, cereal fibres, etc. Suitable cereals may be wheat, rice, barley, spelt, oat, rye, millet, sorghum, triticale, teff. Pseudo cereals such as amaranth and quinoa are also suitable.

In this application, "sugars" means the dry matter of any mono- and disaccharides, whatever the source. "Sugars" therefore include the dry matter of glucose syrup, also called glucose-fructose syrup or fructose-glucose syrup.

The sugars incorporated into the soft cake batter comprise at least carbohydrates with a degree of polymerisation of 1 to 7 at a total amount of about 10 wt.% to about 30 wt.%, preferably about 10 wt.% to about 27.5 wt.%, more preferably about 15 wt.% to about 27.5 wt.%, weight percentage being relative to total weight of the soft cake.

Carbohydrates with degree of polymerisation of 1 to 7 include monosaccharides (such as glucose, galactose, fructose, xylose, ribose), disaccharides (such as sucrose, maltose, lactose, trehalose), maltotriose, maltotetraose, maltopentaose, maltohexaose et maltoheptaose.

Monosaccharides and disaccharides in the soft cake may be carbohydrates with degree of polymerisation of 1 and 2 at a total amount of about 10 wt.% to about 27.5 wt.%, preferably about 10 wt.% to about 25 wt.%, more preferably about 15 wt.% to about 25 wt.%, the weight percentage being relative to total weight of the soft cake.

In this application the word "mature" means to rest the pre-mixture at a temperature higher than ambient temperature. The temperature to be taken into account here is the temperature of the pre-mixture undergoing maturation. Maturation enables the viscosity of the batter to drop to a suitable value for processing.

It is believed that during maturation, other physicals reactions may occur, such as enzymatic hydrolysis, Maillard reaction, etc.

Thanks to the maturing of the pre-mixture, it is possible to obtain a soft cake batter which, once baked, results in a soft cake with a high cereal content, a long shelf life, a good nutritional profile, good organoleptic properties (pleasurable taste and texture), and acceptable volume intake. This soft cake is particularly suitable for breakfast meals. The maturation of the pre-mixture leads to a consistency drop and maltose content increase in the premixture.

Maturation has not been applied to soft cakes. Maturation is known in the context of the production of gingerbreads. However, as explained above, gingerbreads and soft cakes are two different types of product. Further, gingerbreads comprise a high amount of sugars, typically between about 40 wt.% to about 60 wt.%. Therefore, they do not exhibit a good nutritional profile and are not considered healthy products. The maturation step usually takes several days at room temperature. Furthermore, the final gingerbread batter is too viscous to be used in panning technology. Maturing at a temperature of about 45°C to about 70°C is possible because the sugar content is lower than that of gingerbreads. At high temperatures, such as about 60°C it is not possible to industrially process gingerbread dough since it is too sticky.

Maturation can be carried out in a static manner, i.e. during maturation the pre-mixture is not stirred, mixed, kneaded or disturbed in any way. Maturation can also be carried out in a dynamic manner, i.e. by stirring or mixing the pre-mixture. The stirring or mixing enables a reduction in the time needed for maturation. When dynamic maturation is used, the maturation is preferably carried out in the same equipment as that used for forming the pre-mixture.

In this application, the word "dough" means a composition that results from maturation of the pre-mixture made at least from flour, water and sugars.

The portion of flour preferably represents at least about 60%, preferably at least about 70 wt.%, more preferably at least 75 wt.%, of the total flour to be incorporated into the soft cake batter, and still more preferably at least about 85 wt.%. Preferably the portion of flour represents at most 90 wt.% of the total flour to be incorporated into the soft cake batter. With about 60 wt.% of the total flour in the dough, the Brookfield viscosity of the obtained batter is already acceptable and sufficient low so that the batter can be poured and baked in pans. When increasing the percentage to about 70 wt.% or higher, the Brookfield viscosity of the batter is even lower.

The flour content of the dough preferably represents at least about 50 wt % of the weight of the dough. Preferably, the flour content of the dough represents at most 80 wt % of the weight of the dough. The flour is preferably chosen from the group consisting of: wheat flour, corn flour, oat flour, barley flour, rye flour, spelt flour, millet flour, sorghum flour, teff flour, triticale flour, pseudocereal flour such as amaranth flour and quinoa flour, and mixtures thereof. Preferably, the flour is wheat flour. A part of the flour is preferably wholegrain cereal flour, for example at least about 5 wt.% of the total weight of the soft cake. Wholegrain cereals retain the bran and germ unlike refined cereals that only contain the endosperm.

The pre-mixture contains one or more enzymes for boosting the maturation of the dough and thus shortening the maturation time. This makes it possible to further improve the taste of the soft cake by reducing bitterness, for example. Indeed, although it is possible to increase the maturation time and temperature, excessive time and temperature induce bitter and/or pungent flavours. The enzymes that can be used are chosen from the group consisting of: amylases, amyloglucosidase, proteases, hemicellulases, xylanases, cellulose, pullulanase, pentosanases, lipases, phospholipases, transglutaminases, glucose oxidase and mixtures thereof. Use of enzymes for soft cake production has already been described, for example in WO2008/092907 and EP1145637. However, in these documents, the enzymes are roughly used during mixing of the ingredients before baking. There is no specific maturation step. Therefore, it was unpredictable what results would be obtained when enzymes are added to a matured dough. It is to be understood that where the pre-mixture further contains one or more enzymes, these are in addition to any enzymes which may be present in any of the other starting materials. The one or more enzymes are present in the pre-mixture in an amount of from 0.005 to 0.1 wt%, more preferably from 0.01 to 0.09 wt%, still more preferably from 0.05 to 0.08 wt%, based on the total weight of the pre-mixture.

Maturation time as low as 10 min is possible in this method when enzymes are used for the dough. In contrast to the production of gingerbread, which needs a maturation step of one to several days at ambient temperature and a cooling step, the maturation time of the present method only needs to be between about 5 min to about 48 hours, preferably about 10 min to about 24 hours, at a temperature of about 45°C to about 70°C.

Glycerol can further be provided and mixed with flour, water and sugar and/or enzyme(s) for forming a pre-mixture. Glycerol is used to speed up the viscosity reduction of the pre-mixture. This also enables the shortening of the maturation time of the pre-mixture. For example about 10 % to about 100 % of the total amount of glycerol to be used in the recipe can be incorporated in the pre-mixture, preferably from about 20% to about 80%, more preferably from about 35% to about 65%. The other ingredients are ingredients conventionally used in soft cake production such as: eggs, egg fractions (e.g.: egg yolk, egg white, egg powder), fat (e.g.: butter, margarine, vegetable oils, shortening), additional sugars (can be same as those described above), salt, water, leavening powder (sodium bicarbonate, sodium pyrophosphate acid, citric acid, gluconodeltalactone...), flavouring agents (e.g.: natural or artificial fruit flavours, vanilla extract, cocoa powder, coffee extract, tea extract), colouring agents, milk, milk fractions, starch (e.g.: modified or not potato starch, wheat starch), hydrocolloids, emulsifiers (e.g.: mono and diglycerides of fatty acids, propylene glycol esters of fatty acids, lactic acids esters of mono and diglycerides of fatty acids, sodium stearoyl-2-lactylate), polyols (glycerol, sorbitol...), potassium sorbate, fibers. Preferably, the other ingredients comprise at least about 5% wt. of egg/egg fractions and/or at least about 5% wt. of fat and/or sugars.

The soft cake itself may be produced by pouring the previously described soft cake batter is poured into a pan and baking it in the pan.

The method can also comprise providing a filling for the soft cake. The filling of the soft cake can be incorporated therein before baking, for example by alternatively pouring a first portion of soft cake batter, a portion of filling and a second portion of soft cake batter. This will create a single portion of filling inside the soft cake. More than one portion of filling can be provided into the soft cake by multiplying the steps of alternative pouring portions of soft cake batter and portions of filling. In this particular case more than one type of filling can be used.

The filling can also be provided after baking by injection or spreading. For example the filling may be injected into the baked soft cake. Another example would be slicing the baked soft cake at least into two parts and spreading the filling between the parts. It is possible to use more than one filling. In an additional example, the filling may simply be spread on top of the soft cake.

The filling may be water-based or fat-based.

In this application, the word "matured flour" means flour which has been matured during the preparation of the batter, and which was initially added to the pre-mixture as a non-matured flour. For example, for a soft cake batter comprising flour wherein 60 wt.% of the flour is matured flour, the remaining 40 wt.% of the flour is freshly added post-maturation to form the batter.

Sugars in the soft cake comprise at least carbohydrates with degree of polymerisation of 1 to 7 at a total amount of about 10 wt.% to about 30 wt.%, preferably about 10 wt.% to about 27.5 wt.%, more preferably about 15 wt.% to about 27.5 wt.%, weight percentage being relative to total weight of the soft cake.

Carbohydrates with degree of polymerisation of 1 to 7 include monosaccharides (such as glucose, galactose, fructose, xylose, ribose), disaccharides (such as sucrose, maltose, lactose, trehalose), maltotriose, maltotetraose, maltopentaose, maltohexaose and maltoheptaose.

Monosaccharides and disaccharides in the soft cake may be carbohydrates with degree of polymerisation of 1 and 2 at a total amount of about 10 wt.% to about 27.5 wt.%, preferably about 10 wt.% to about 25 wt.%, more preferably about 15 wt.% to about 25 wt.%, the weight percentage being relative to total weight of the soft cake.

The soft cake preferably further comprises wholegrain cereal, for example about 5 wt.% of the total weight of the soft cake.

The soft cake can further comprise at least about 5 wt.% fibre relative to the total weight of the soft cake. Suitable fibre can be:

- insoluble fibres such as those present in whole wheat, oat, barley, rye, rice, and especially in the bran of these cereals, fruits (such apple, citrus, prune, mango, fig, etc.), vegetables (such as tomato, carrot, celery, etc.) or cocoa;
- soluble fibres that generate a low viscosity in aqueous solution, usually referred to as "non-viscous soluble fibres", such as fructo-oligosaccharides, galacto-oligosaccharides, xylo-oligosaccharides, manno-oligosaccharides, polydextrose, resistant dextrins, cyclo-dextrins, acacia gum, larch gum, and the like;
- viscous soluble fibres, such as guar gum and other galactomannans (locust bean gum, tara gum, fenugreek), glucomannans or konjac flour, psyllium, xanthan, alginates, high-methoxy pectins, beta-glucans from oat or barley, arabinoxylans from wheat, chemically modified cellulosics; and
- mixtures thereof.

Insoluble fibres, soluble fibres (not viscous soluble fibres) and mixtures thereof are preferred fibres.

It will be understood that where these fibres are to be incorporated into the soft cake, they are in addition to any fibre which may be present in the flour or any other ingredients.

The water activity (Aw) of a product is a notion which is well known in the food industry field. This value measures the availability of water in a sample. In most cases, this water activity is not proportional to the water content of the product.

Methods for measuring Aw of a product are known to the person skilled in the art. For example, it can be measured with an Aqualab 4TE, or a Novasina. All Aw values indicated hereafter are measured at $25 \pm 0.2°C$.

The overall Aw value of the soft cake is about 0.50 to about 0.90, preferably about 0.65 to about 0.85, more preferably about 0.67 to about 0.80. If the Aw is below 0.50, the soft cake may be of an overly dry consistency. If the Aw is over 0.95, the product may be too sticky and the shelf life may be compromised.

The soft cake may comprise one or more fillings as mentioned above.

The soft cake has a shelf life of more than about 4 months, preferably more than about 6 months, more preferably between about 6 and about 12 months.

According to the invention there is provided a method for making a soft cake, the method comprising:

preparing a mixture by blending sugars, a first portion of flour and water,
increasing or maintaining the temperature of the mixture such that, by the end of the blending, the temperature of the mixture reaches at least 45ºC, preferably from 50 ºC to 70 ºC, still preferably around 60 ºC,
allowing the heated mixture to mature at a temperature of from 45ºC to 70 ºC, still preferably around 60 ºC,
combining the matured mixture with a second portion of flour and, optionally, further ingredients to form a batter,
shaping and baking the batter to form a soft cake,
wherein the soft cake comprises at least 40 wt% cereal material, at most 30wt% sugars, and wherein the ratio of the first portion of flour to the second portion of flour is at least 3:2.

The heated mixture is allowed to mature for from 10 min to 48 hours, preferably from 10 min to 24 hours, more preferably from 10 min to 1 hour. The advantages of maturation are explained above.

Preferably, the heated blend is allowed to mature at a constant temperature in the range of 50°C to 70°C.

Preferably, the soft cake has a shelf life of more than about 4 months, preferably more than about 6 months, more preferably between about 6 and about 12 months. The soft cakes of the present invention have a relatively low fat content, and so in order for a high stability to be obtained, the Aw value has to be relatively low. The present inventors have surprisingly and unexpectedly discovered that the maturation of the blend gives rise to a soft cake with a higher moisture content but lower Aw value than those produced from prior art processes. This provides for a higher quality soft cake (in terms of, for example, volume and softness), and yet improving stability. Data to this effect is provided in Comparative Example 1 below.

Preferably, the ratio of the first portion of flour to the second portion of flour is from 3:2 to 9:1. If a ratio of below 3:2 is used, the changes in the blend properties described above are not sufficient to enable a pourable batter to be obtained.

Preferably, the soft cake comprises at most 50% cereal material.

The mixture further comprises one or more enzymes selected from the group consisting of amylases, amyloglucosidase, proteases, hemicellulases,

xylanases, cellulase, pullulanase, pentosanases, lipases, phospholipases, transglutaminases, glucose oxydase or mixtures thereof, wherein the one or more enzymes are present in the mixture in an amount of from 0.01 to 1.0 wt%, more preferably from 0.05 to 0.8 wt%, still more preferably from 0.1 to 0.4 wt%, based on the total weight of the blend before maturation, wherein the one or more enzymes are in addition to any enzymes which may be present in any of the other starting materials. The advantages of including one or more enzymes in the mixture are given above.

Measurement

Viscosity measurement

3 kinds of measurements may be used:

1. Brookfield viscosity is measured with a Brookfield viscometer using spindle n°6 and a rotation speed of 2.5 rpm. Measurement time is set at 1 min at 20°C for the batter. The Brookfield viscosity measure have been translated from cps to Pa.s via the relation 1 cp = 0.001 Pa.s.

2. Shear measurements (flow curves) were performed to evaluate the flow behavior of the sourdough and batter systems. Apparent viscosity was measured as a function of shear rate over a range of 10-3 - 10 s-1 at 25°C. This relies on the use of a high performance rheometer MCR300 (Anton Paar Physica) interfaced with a PC and equipped with a coaxial measuring unit (TEZ 150-PC) and a coaxial cylinder measurement system (CC27).

3. Bostwick flowability of the dough or the batter is measured using a Bostwick consistometer with a flow support presenting graduations at 0.5 cm intervals. The dough or the batter is placed in a reservoir of the consistometer, behind a spring loaded gate. Upon measurement, the gate is opened to let the dough or the batter flow onto the flow support for 1 min. Temperature of the measurement is the temperature of fermentation of the dough analysed. After 1 min, the length along which the sourdough or the batter has flowed on the flow support is noted.

Preferably, the viscosity of the dough is measured using the Bostwick method.

*Consistency measurements*

The mixolab (Chopin technologies) allows measuring rheologic behaviour of dough which bring of temperature variation and dough mixing. Mixolab measures the torques (N.m) produced by mixing the dough between two kneading arms, where the dough is subjected to dual mixing and temperature constrains. 85 g of batter is introduced into the mixolab and is mixed at a constant mixing rate (60 rpm) and constant temperature (30°C). The dough consistency is read after 6 min of mixing.

*Volume and height measurements*

Soft cake volume is measured by seed displacement method. This method consists in:

- first filling a container of known volume $V_{container}$ and known weight $m_{container}$ with rapeseeds uniformly through tapping and smoothing the surface with a ruler, the weight $m_1$ of the rapeseeds needed to fill the container is measured;
- a soft cake is placed inside the container and rapeseeds are poured down to fill the container, the container is tapped and the surface is smoothed with a ruler, the weight $m_2$ of the rapeseeds needed to filled the container wherein the soft cake is placed is measured;
- the soft cake volume $V_{cake}$ is measured as follows:

$$V_{cake} = (1 - m_2/m_1) \cdot V_{container}.$$

From this measurement, soft cake density $D_{cake}$ is easily determined, by measuring first the weight $m_{cake}$ of the soft cake:

$$D_{cake} = m_{cake}/V_{cake}.$$

*Moisture measurement*

*Batter moisture:* Batter moisture is determined with a halogen moisture analyser HGR3 (Mettler Toledo). 2.7 g of batter is placed in the moisture analyser and heated during 9 min at 140°C.
*Soft cake moisture:* Soft cake moisture is determined with a halogen moisture analyser HGR3 (Mettler Toledo). 1.3 g of soft cake is placed in the moisture analyser and heated during 10 min at 130°C.

*Water activity measurement*

Water activity (Aw) is determined using Aqualab 4TE. A sample is placed in a specific recipient and analysed with Aqualab 4TE. The Aw value at 25°C is noted and referred to.

*Texture assessment*

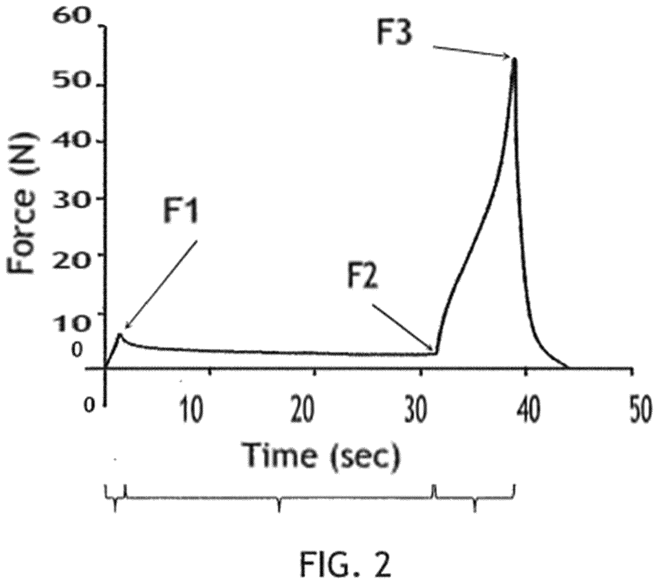

5 mm on each side of a soft cake and the top part thereof are cut out in order to standardize the cake samples so that the height of the soft cake is 12 mm. The results are expressed as average and standard deviation of the texture assessment of six soft cakes.
Soft cake softness and resilience are measured with a TAXT+ from Sable Micro System Ltd, with a compression-relaxation-compression (CRC) program. The CRC phases are (see figure 2):

- the soft cake is subjected to a 10 % compression, *i.e.* the soft cake is compressed from 12 mm in height to 10.8 mm with an aluminium cylinder and a crosshead speed of 1 mm/sec;
- the soft cake is then allowed to relax for 30 sec; and
- finally the soft cake is subjected to a 50 % compression, *i.e.* the soft cake is compressed from 12 mm in height to 6 mm, with the same aluminium cylinder and the same crosshead speed of 1 mm/sec.

Force F1 necessary for the 10 % compression (peak on the force=f(time) graph of figure 3 during the 10 % compression phase) is noted. Force F2 corresponding to the force virtually subjecting the soft cake after the relaxation phase is noted. Ratio R=(F1-F2)/F1 is computed. This ratio gives a relative value of the crumb resilience; the lower the ratio is, the higher the resilience.

Force F3 necessary for the 50 % compression (peak on the force=$f$(time) graph of figure 3 during the 50 % compression phase) is noted. Force F3 corresponds to the soft cake hardness expressed in Newton (N).

The invention will now be described in relation to the following non-limiting examples.

Example 1

An example of a method for producing soft cakes according to the above described method is detailed hereafter.

A pre-mixture was obtained by mixing the following ingredients (see Table 1)

Table 1

| Ingredients | Amount (kg) |
| --- | --- |
| Whole wheat flour | 14.7 |
| Wheat flour | 24.1 |
| Water | 13.6 |
| Glucose syrup | 13.0 |
| Enzyme | 0.1 |
| | |
| **Total** | **65.6** |

The pre-mixture is obtained by mixing with a Z-blade all the ingredients of Table 1 above. Water and glucose syrup were previously mixed together and heated to 80°C. The mixing with the Z-blade is done for 10 min at low speed. The temperature of the pre-mixture at the end of this operation is about 50 °C.

The pre-mixture is then poured into a container and left in an oven for 24 hours at 45 °C for maturation and for forming a dough.

After the maturation step, the dough is allowed to cool down to 35 °C.

Then, the dough is transferred to a high speed mixer (STEPHAN) and the other ingredients are added to the dough as indicated herebelow in Table 2.

Table 2

| Ingredients | Amount (kg) |
| --- | --- |
| Dough | 65.6 |
| Egg | 9.7 |
| Fat | 11.1 |
| Sugars | 0.8 |
| Glycerol | 5.3 |
| Salt | 0.2 |
| Emulsifier | 2.9 |
| Others | 4.4 |
| | |
| **Total** | **100.0** |

This mixing step lasts 1 min 30 sec at medium speed.

The Bostwick flowability of the batter is 6 cm after 1 min.

After this second mixing step, the obtained batter is poured into pans, each receiving 35 g and baked in a continuous oven at 180°C for about 20 min.

The total cereal content of the soft cakes is 46.5 wt.%.

The final soft cakes present a nice uniform shape similar to soft cakes obtained from traditional recipe, an average measured volume of 72.1 mL and a measured density of 0.42 g/cm$^3$. The soft cakes have average measured hardness of 191 N, and average crumb resilience after four weeks of 0.556.

The average moisture content of the soft cake is 20.8 wt.% and the Aw value is 0.767.

Example 2

In this example, soft cakes are made from the ingredients presenting in table 3 and table 4. Table 3 presents the ingredients that are mixed for forming the dough. Table 4 presents the ingredients that are added to the dough for forming a batter. The ingredient amounts are expressed in kg except for flour that is expressed as weight percentage of the total amount of flour, which is 39.3 kg.

Table 3

| Ingredients | Example 2.1 | Example 2.2 | Example 2.3 | Example 2.4 |
|---|---|---|---|---|
| Flour | 60 wt.% | 75 wt.% | 90 wt.% | 100 wt.% |
| Water | 12.6 | | | |
| Glucose syrup | 10.7 | | | |
| Enzymes | 0.1 | | | |

Table 4

| Ingredients | Example 2.1 | Example 2.2 | Example 2.3 | Example 2.4 |
|---|---|---|---|---|
| Flour | 40 wt.% | 25 wt.% | 10 wt.% | 0 wt.% |
| Egg | 8.9 | | | |
| Oil | 10.3 | | | |
| Sugars | 6.8 | | | |
| Glycerol | 5.3 | | | |
| Emulsifier | 2.7 | | | |
| Others | 3.3 | | | |

Water and sugars were previously mixed and heated to a temperature of about 80°C. Then water and glucose syrup are mixed with the other ingredients of Table 3 with a Z-blade at low speed to form a pre-mixture. The mixture presents a temperature of roughly 60°C. Then the pre-mixture is matured under stirring for 30 min, obtaining a dough at 61 °C.

The dough is then cooled during 6 min so that its temperature decreases from 61°C to 39°C.

Flowability values of the doughs obtained through Bostwick (in cm) are summed up in Table 5:

Table 5

| Example 2.1 | Example 2.2 | Example 2.3 | Example 2.4 |
|---|---|---|---|
| 7.25 | 3.75 | 2.25 | 0.75 |

Then, the other ingredients of table 4 are added to the dough by further mixing with the Z-blade at medium speed until a homogeneous soft cake batter is obtained.

Bostwick flowability values (in cm) and Brookfield viscosity values (in Pa.s) of the soft cake batter are summed up in Table 6 below:

Table 6

| | Example 2.1 | Example 2.2 | Example 2.3 | Example 2.4 |
|---|---|---|---|---|
| Bostwick | 2 | 3.25 | 4.25 | 4 |

(continued)

|  | Example 2.1 | Example 2.2 | Example 2.3 | Example 2.4 |
|---|---|---|---|---|
| Brookfield | 480 | 260 | 190 | 220 |

After that, the obtained soft cake batter is poured into pans, each receiving 35 g and baked in an oven at 180°C for about 20 min.

Soft cakes of Examples 2.1 to 2.4 contain 45.9 wt.% cereal materials.

Soft cakes of Example 2.1 are rather crumbly, with holes in the crumb, rather dry, but still acceptable.

Soft cakes of Examples 2.2 to 2.4 show good properties (better volume, alveolation, mouthfeel).

Height, volume, density, hardness after 3 months and water content of the soft cakes are summed up in table 7 below.

Table 7

|  | Example 2.1 | Example 2.2 | Example 2.3 | Example 2.4 |
|---|---|---|---|---|
| Height (mm) | 37.2 | 33.9 | 35.3 | 42.6 |
| Volume (mL) | 77.6 | 74.2 | 75.2 | 81.2 |
| Density (kg/L) | 0.394 | 0.412 | 0.400 | 0.384 |
| Hardness after 3 months (N) | 130 | 143 | 127 | 110 |
| Water content (%) | 14.5 | 16.6 | 15.8 | 16.4 |

Thus, the higher the percentage of flour used for the maturation step is, the better the volume, density and softness of the final soft cakes are.

Example 3

In this example, two doughs are made in the same manner as the dough of example 1 but are allowed to rest up to 48 hours. One dough originated from a pre-mixture matured at 45°C and the other at 60°C.

Dough consistency values (in N.m) before maturation, at 24 hours and 48 hours after the maturation started are showed in table 8 below.

Table 8

| Time (h) | 45°C | 60°C |
|---|---|---|
| 0 | 2.12 | 1.80 |
| 24 | 0.82 | 0.23 |
| 48 | 0.50 | 0.15 |

This shows that maturation enables to decrease consistency of the dough.

Comparative example 1

A comparative example of a method for producing soft cakes that was not produced according to the above described method is detailed hereafter.

In this case all the ingredients of table 1 and table 2 are mixed together within a high speed mixer during 30 s.

Then the batter is poured and baked as for Example 1.

The total cereal content of the soft cakes was 46.5 wt.%.

The obtained soft cakes present various and dissimilar shapes, a measured volume of 67.3 mL and a measured density of 0.48 g/cm$^3$. The various and dissimilar shapes are mainly due to the behaviour of the resulting batter, which is rather a dough since no flowability was reported on Bostwick equipment. The soft cakes have an average measured hardness of 369 N, and a crumb resilience of 0.491 after 4 weeks.

The moisture content of the soft cakes is 18.5 wt.% with an Aw value of 0.780.

Therefore, this comparative example 1 shows that the soft cakes of Example 1 exhibit uniform and regular shapes, while those of Comparative example 1 present a poor standard deviation with respect to shape.

The average volume of the soft cakes of Example 1 are 7.13 % higher than that of the soft cakes of Comparative example 1, the density of the soft cakes of Comparative example 1 is 14.3 % higher than that of Example 1.

Additionally, the soft cakes of Example 1 are softer than those of Comparative example 1 (hardness divided by 2), and have a less elastic crumb. Thus, the crumb texture of the soft cakes of Example 1 is closer to that of traditional soft cakes.

Further, the moisture of the soft cakes of Example 1 is higher than that of the soft cakes of Comparative example 1, but the Aw value of the soft cakes of Example 1 is lower than that of Comparative example 1. This demonstrates that the method of the present invention produces higher quality soft cakes (in terms of softness, volume etc.) while improving their stability.

Comparative example 2

The same method as Example 2 is used but with 40 wt.% of flour to be incorporated to make the dough.

The measured Bostwick flowability values are 18 cm for the dough and 1.75 cm for the batter. Brookfield viscosity value is 520 Pa.s for the batter, what is not acceptable for a batter to be poured and baked in pans. On the contrary, although the Bostwick flowability value of the doughs of Example 2 are lower than that of the dough of Comparative example 2, what means that the latter flows more easily that the formers, the Bostwick flowability and Brookfield viscosity values of the batters of Example 2 all show that these batters are much more suitable when they should be poured and baked in pans.

The soft cakes of Comparative example 2 are very crumbly and not acceptable. Texture measurements were not possible for the Comparative example 2 since the soft cakes were too crumbly.

**Claims**

1. A method for making a soft cake, the method comprising:

   preparing a mixture by blending sugars, a first portion of flour and water,
   increasing or maintaining the temperature of the mixture such that, by the end of the blending, the temperature of the mixture reaches at least 45ºC, preferably from 50 ºC to 70 ºC, still preferably around 60 ºC,
   allowing the heated mixture to mature at a temperature of from 45ºC to 70 ºC, more preferably around 60 ºC,
   combining the matured mixture with a second portion of flour and, optionally, further ingredients to form a batter,
   shaping and baking the batter to form a soft cake,
   wherein the soft cake comprises at least 40 wt% cereal material, at most 30wt% sugars, and wherein the ratio of the first portion of flour to the second portion of flour is at least 3:2,
   wherein the heated mixture is allowed to mature for from 10 min to 48 hours,
   wherein the mixture further comprises one or more enzymes selected from the group consisting of amylases, amyloglucosidase, proteases, hemicellulases, xylanases, cellulase, pullulanase, pentosanases, lipases, phospholipases, transglutaminases, glucose oxydase or mixtures thereof,
   wherein the one or more enzymes are in addition to any enzymes which may be present in any of the other starting materials, and
   wherein the one or more enzymes are present in the mixture in an amount of from 0.01 to 1.0 wt% based on the total weight of the mixture before maturation.

2. The method of claim 1, wherein the heated mixture is allowed to mature for from 10 min to 24 hours, more preferably from 10 min to 1 hour, and/or wherein the heated mixture is allowed to mature at a constant temperature in the range of 50°C to 70°C.

3. The method of claim 1 or claim 2, wherein the soft cake has a shelf life of more than about 4 months, preferably more than about 6 months, more preferably between about 6 and about 12 months.

4. The method of any of claims 1 to 3, wherein the ratio of the first portion of flour to the second portion of flour is from 3:2 to 9:1, and/or wherein the soft cake comprises at most 50% cereal material.

5. The method of any of claims 1 to 4, wherein the one or more enzymes are present in the mixture in an amount of from 0.05 to 0.8 wt%, more preferably from 0.1 to 0.4 wt%, based on the total weight of the mixture before maturation.

**6.** The method of any of claims 1 to 5, wherein the method further comprises packaging the soft cake.

**Patentansprüche**

**1.** Verfahren zum Herstellen eines Soft-Cakes, wobei das Verfahren Folgendes umfasst:

Herstellen einer Mischung durch Vermischen von Zuckern, einem ersten Teil Mehl und Wasser,
Erhöhen oder Beibehalten der Temperatur der Mischung, so dass am Ende des Vermischens die Temperatur der Mischung mindestens 45°C erreicht, vorzugsweise von 50 °C bis 70°C, mehr bevorzugt ca. 60 °C,
Reifenlassen der erwärmten Mischung bei einer Temperatur von 45 °C bis 70 °C, mehr bevorzugt ca. 60 °C,
Kombinieren der gereiften Mischung mit einem zweiten Teil Mehl und wahlweise ferner Inhaltsstoffen zum Bilden eines Backteigs,
Formen und Backen des Backteigs, um einen Soft-Cake zu bilden,
wobei der Soft-Cake mindestens 40 Gew.-% Getreidematerial, höchstens 30 Gew.-% Zucker umfasst und wobei das Verhältnis des ersten Teils Mehl zum zweiten Teil Mehl mindestens 3:2 beträgt,
wobei die erwärmte Mischung für 10 min bis 48 Stunden reifen gelassen wird,
wobei die Mischung ferner ein oder mehrere Enzyme umfasst, die ausgewählt sind aus der Gruppe bestehend aus Amylasen, Amyloglucosidase, Proteasen, Hemicellulasen, Xylanasen, Cellulase, Pullulanase, Pentosanasen, Lipasen, Phospholipasen, Transglutaminasen, Glucoseoxydase oder Mischungen davon,
wobei das eine oder die mehreren Enzyme zusätzlich zu jeglichen Enzymen vorliegen, die in einem der anderen Ausgangsmaterialien vorhanden sein können, und
wobei das eine oder die mehreren Enzyme in der Mischung in einer Menge von 0,01 bis 1,0 Gew.-%, bezogen auf das Gesamtgewicht der Mischung, vor dem Reifenlassen vorhanden sind.

**2.** Verfahren nach Anspruch 1, wobei die erwärmte Mischung für 10 min bis 24 Stunden, mehr bevorzugt von 10 min bis 1 Stunde reifen gelassen wird und/oder wobei die erwärmte Mischung bei einer konstanten Temperatur im Bereich von 50 °C bis 70 °C reifen gelassen wird.

**3.** Verfahren nach Anspruch 1 oder Anspruch 2, wobei der Soft-Cake eine Haltbarkeitsdauer von mehr als ungefähr 4 Monaten, vorzugsweise mehr als ungefähr 6 Monaten, mehr bevorzugt zwischen ungefähr 6 und ungefähr 12 Monaten aufweist.

**4.** Verfahren nach einem der Ansprüche 1 bis 3, wobei das Verhältnis des ersten Teils Mehl zum zweiten Teil Mehl von 3:2 bis 9:1 beträgt und/oder wobei der Soft-Cake höchstens 50 % Getreidematerial umfasst.

**5.** Verfahren nach einem der Ansprüche 1 bis 4, wobei das eine oder die mehreren Enzyme in der Mischung in einer Menge von 0,05 bis 0,8 Gew.-%, mehr bevorzugt von 0,1 bis 0,4 Gew.-%, bezogen auf das Gesamtgewicht der Mischung, vor dem Reifenlassen vorhanden sind.

**6.** Verfahren nach einem der Ansprüche 1 bis 5, wobei das Verfahren ferner das Verpacken des Soft-Cakes umfasst.

**Revendications**

**1.** Procédé de fabrication d'un gâteau moelleux, le procédé comprenant :

la préparation d'un mélange en mélangeant des sucres, une première partie de farine et de l'eau,
l'augmentation ou le maintien de la température du mélange de telle sorte que, à la fin du mélangeage, la température du mélange atteint au moins 45 °C, de préférence de 50 °C à 70 °C, de préférence également environ 60 °C, le fait de laisser mûrir le mélange chauffé à une température allant de 45 °C à 70 °C, plus préférablement environ 60 °C,
la combinaison du mélange mûri avec une deuxième partie de farine et, éventuellement, des ingrédients supplémentaires pour former une pâte lisse,
la mise en forme et la cuisson de la pâte lisse pour former un gâteau moelleux,
dans lequel le gâteau moelleux comprend au moins 40 % en poids de matière céréalière, au plus 30 % en poids de sucres, et dans lequel le rapport de la première partie de farine à la deuxième partie de farine est d'au moins 3:2,

dans lequel on laisse mûrir le mélange chauffé pendant 10 min à 48 heures,

dans lequel le mélange comprend en outre une ou plusieurs enzymes choisies dans le groupe constitué d'amylases, amyloglucosidase, protéases, hémicellulases, xylanases, cellulase, pullulanase, pentosanases, lipases, phospholipases, transglutaminases, glucose oxydase ou leurs mélanges,

dans lequel la ou les enzymes sont en plus de n'importe quelles enzymes qui peuvent être présentes dans n'importe laquelle des autres matières de départ, et

dans lequel la ou les enzymes sont présentes dans le mélange en une quantité de 0,01 à 1,0 % en poids sur la base du poids total du mélange avant maturation.

2. Procédé selon la revendication 1, dans lequel on laisse mûrir le mélange chauffé pendant 10 min à 24 heures, plus préférablement de 10 min à 1 heure, et/ou dans lequel on laisse mûrir le mélange chauffé à une température constante dans la plage de 50 °C à 70 °C.

3. Procédé selon la revendication 1 ou la revendication 2, dans lequel le gâteau moelleux a une durée de conservation de plus d'environ 4 mois, de préférence plus d'environ 6 mois, plus préférablement entre environ 6 et environ 12 mois.

4. Procédé selon l'une quelconque des revendications 1 à 3, dans lequel le rapport de la première partie de farine à la deuxième partie de farine va de 3:2 à 9:1, et/ou dans lequel le gâteau moelleux comprend au plus 50 % de matière céréalière.

5. Procédé selon l'une quelconque des revendications 1 à 4, dans lequel la ou les enzymes sont présentes dans le mélange en une quantité de 0,05 à 0,8 % en poids, plus préférablement de 0,1 à 0,4 % en poids, sur la base du poids total du mélange avant maturation.

6. Procédé selon l'une quelconque des revendications 1 à 5, où le procédé comprend en outre l'emballage du gâteau moelleux

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008092907 A

- EP 1145637 A